# EUROPEAN PATENT SPECIFICATION

(11) **EP 0 353 841 B1**
(45) Date of publication and mention of the grant of the patent: **28.07.1993**
(21) Application number: 89305136.7
(22) Date of filing: 22.05.1989
(51) Int. Cl.: B25J 13/02, B25J 13/08

(54) **Human-in-the-loop machine control loop**
Handsteuerhebel für einen Steuerkreis einer Maschine
Commande à préhension manuelle destinée à une boucle de contrôle pour machine

(30) Priority: 18.07.1988 US 219789
(43) Date of publication of application: 07.02.1990
(73) Proprietor: SPAR AEROSPACE LIMITED, Weston Ontario M9L 2W7 (CA)
(72) Inventor: Fung, Patrick, Willowdale Ontario M2H 2Z6 (CA); Norgate, Graham, Oakville Ontario L6J 2N6 (CA); Dilts, Timothy, Newmarket Ontario L3Y 7X5 (CA); Jones, Andrew, Toronto Ontario (CA); Ravindran, Rangaswamy, East Ontario (CA)
(74) Representative: Lawrence, John Gordon

(56) References cited:
- EP-A- 0 019 596
- EP-A- 0 051 387
- EP-A- 0 080 416
- DE-A- 1 531 181
- DE-A- 3 045 094
- FR-A- 1 154 538
- FR-A- 2 027 678
- FR-A- 2 275 833
- FR-A- 2 297 698
- US-A- 4 298 308
- ATOMKERNENERGIE. vol. 48, no. 4, 1986, MUNCHEN DE pages 251 - 254; KOHLER: "Elektrischer Master-Slave-Manipulator EMSM 2"

## Description

This invention relates to a human-in-the-loop control loop for a machine having a movable operative part, such as the gripper of a robotic manipulator.

### BACKGROUND OF THE INVENTION

Fully automated robotic control has been utilised in many industrial applications, but there are still many applications where such a technique is not sufficiently mature to be applied. The main reason is the lack of an intelligent and stable control system that can operate effectively when unscheduled tasks and unpredictable disturbances appear. Another reason is that the software modelling of a task and a workspace is usually very complex so that in many circumstances such modelling is not practical. Where automated robotic control is not practical, the conventional human-in-the-loop control method is the alternative because the human operator in the control loop is capable of generating control signals adaptive to task and workspace variations. A human operator creates a control loop even where the only feedback to him is visual - he can adapt his control signals according to what he sees the robot doing.

The control input device for a human-in-the-loop system varies according to the human engineering factors and the nature of the applications. For resolved rate control and resolved position control, a commonly used input device is a passive hand controller comprising a pair of three degree-of-freedom joysticks, one for translational control and one for rotational control.

Where the gripper of the manipulator experiences constrained forces, it is essential that the constrained forces be controlled effectively. One known method to control forces in the human-in-the-loop system is to measure the forces and display them graphically or numerically. The operator watches the displayed forces as he/she regulates the manipulator through the passive hand controller. This is called force feedback via vision. This method can only be used in a very slow control system because of the time delay in displaying the force and the time lag in the vision feedback and interpretation process. Other disadvantages of this method are that it requires the operator to watch the manipulator operation as well as the displayed forces, hence it may divert the operator's attention and cause excess operator strain.

Another method is to reflect the forces encountered by the manipulator through a hand controller to provide force feel for the operator. The operator can then control the encountered forces by adjusting the hand controller position, which is interpreted as the manipulator command signal. This method does not require a visual display of the forces, hence the operator can concentrate on the motion of the manipulator. Master-slave control has been the conventional method to reflect the forces encountered by the manipulator in the last thirty years. The method requires two identical or scaled manipulators, one (the master) being moved by an operator as a hand controller for generating command signals and reflecting forces, and the other for performing the task. Master-slave control uses the discrepancies between joint positions of the master manipulator and the corresponding joint position of the slave arm to generate force signals. This system is expensive and requires a large workspace. The master arm (control input device) kinematics are unique to a particular slave arm, hence the master arm cannot be used with other types of manipulators. Furthermore, the mechanical system is very complicated and can only handle small payloads (up to about 25 kg).

The characteristics of the master-slave system do not meet present advanced manipulator control needs, for example the control of large robots in space.

Recently, two new force reflecting hand controllers have been developed. These are the six Degree Of Freedom (DOF) Universal Force Reflecting Hand Controller of JPL (Jet Propulsion Laboratory), and the 9-String 6-DOF Force Reflecting Hand Controller of the University of Texas at Austin. The former hand controller consists of a set of pulleys and cables to transmit joint motor torques to the handle. The latter hand controller uses cables and cylinders to transmit joint motor torques to the handle. Both hand controllers suffer the drawback that the dynamic characteristics of the cables, pulleys and cylinders disturb the force feedback loops. Other drawbacks of these hand controllers are that the torque transmission mechanisms have significant friction, the mechanical system and the software are complex, and the physical sizes, though small as compared with the master arm of the master-slave system, are still relatively large.

Further, in no known active (i.e., force reflecting) human-in-the-loop control loop is it possible to emulate a smooth passive (i.e., non-force reflecting) human-in-the-loop control loop. For some applications, for example in manual augmented (resolved rate) control of the remote manipulator of NASA's space shuttle, this feature is essential.

Consequently, there remains a need for a machine control loop capable of reflecting forces encountered at the operative part of the machine in a hand controller that avoids the problems and the drawbacks of known systems.

US-A-4567417 discloses a human-in-the-loop control loop for a machine having a moveable operative part comprising:
a hand controller having at least one degree of freedom so as to be deflectable in order to provide hand controller position signals for moving said operative part, each degree of freedom of said hand controller controlling motion of said operative part along one path; and
position mapping means to map each of said hand controller position signals to an operative part position command signal indicative of a position for said operative part.

### SUMMARY OF THE INVENTION

Accordingly, there is provided a human-in-the-loop control loop for a machine having a moveable operative part comprising: a hand controller having at least one degree of freedom so as to be deflectable in order to provide hand controller position signals for moving said operative part, each degree of freedom of said hand controller controlling one direction of motion of said operative part; sensing means responsive to a condition existing at said operative part for providing condition signals indicative of the intensity of said condition at said operative part in each direction of motion of said operative part controlled by a degree of freedom of said hand controller; torque generator control signal production means selectively responsive to said condition signals to produce torque generator control signals; torque generator means for selectively receiving said torque generator control signals for generating torques to oppose deflection of said hand controller such that, when said torque generator control signal production means is responsive to said condition signals, the torque opposing deflection of said hand controller in any given degree of freedom of said hand controller is related to the intensity of said condition in the direction of motion of said operative part controlled by said given degree of freedom of said hand controller.

According to another aspect of the invention there is provided a human-in-the-loop control loop for a machine having a moveable operative part comprising: a hand controller having at least one degree of freedom so as to be deflectable in order to provide hand controller position signals for moving said operative part, each degree of freedom of said hand controller controlling one direction of motion of said operative part; torque generator means for generating torques to oppose deflection of said hand controller; position mapping means to map each of said hand controller position signals to an operative part position command signal indicative of a position for said operative part; velocity mapping means to map each of said hand controller position signals to an operative part velocity command signal indicative of a velocity for said operative part; selector means to selectively actuate either said position mapping means or said velocity mapping means; and velocity feedback means to negatively feed back the rate of movement of said hand controller in each degree of freedom of said hand controller to said torque generator means such that a torque proportional to the rate of movement of said hand controller in any given degree of freedom is generated to oppose the rate of deflection of said hand controller in said given degree of freedom.

According to yet another aspect of the invention there is provided a three degree of freedom hand controller for moving the moveable operative part of a machine in three senses comprising: upstanding supports rotatably supporting a cradle; an arm received by said cradle such that the longitudinal axis of said arm is perpendicular to the axis of rotation of said cradle, said arm having a forearm rotatable about its longitudinal axis; a joystick supported for rotation about its longitudinal axis by said forearm such that the longitudinal axis of said joystick is substantially perpendicular to the longitudinal axis of said forearm and is substantially perpendicular to the axis of rotation of said cradle.

### BRIEF DESCRIPTION OF THE DRAWINGS

Figure 1 is a schematic perspective view of a robotic manipulator controlled by a human operator and incorporating an embodiment of the control loop of this invention;
Figure 2 is a perspective view of an embodiment of a hand controller constructed according to this invention;
Figure 3 is a partial cross sectional view of a portion of the hand controller of Figure 2;
Figure 4 is a block diagram of an embodiment of a robotic control loop constructed according to this invention; and
Figure 5 is a detailed block diagram of the robotic control loop of Figure 4.

### DESCRIPTION OF PREFERRED EMBODIMENTS

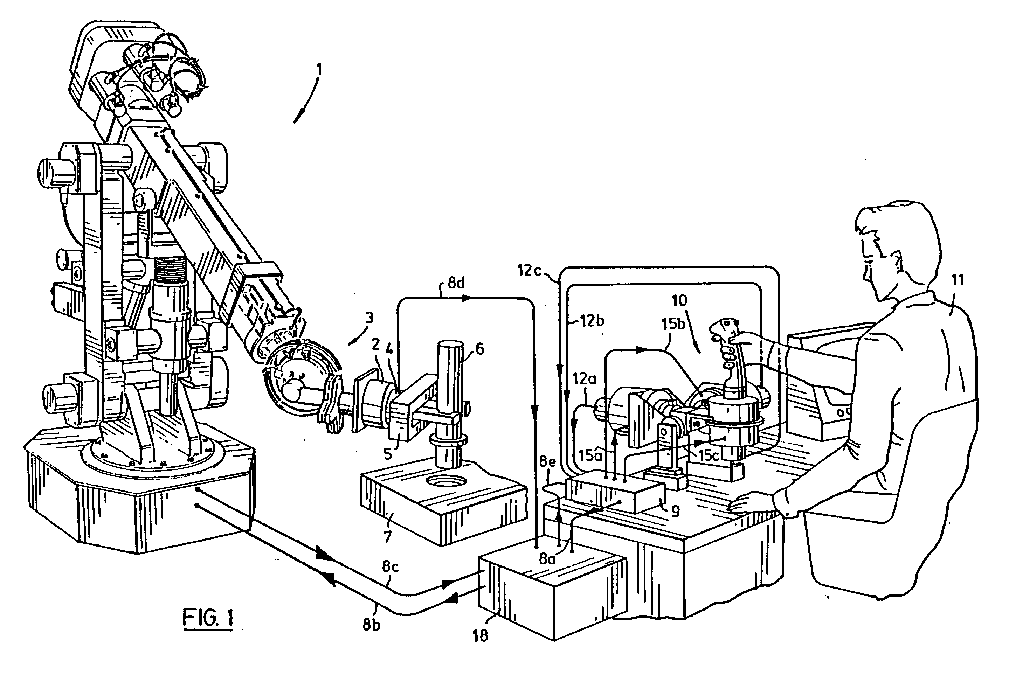

Figure 1 is an illustration of an embodiment of the control loop of this invention. A robotic manipulator is illustrated generally at 1. A compliance device 2 is mounted proximate the wrist joint 3 of the manipulator and supports force-moment sensor 4. The force-moment sensor in turn supports a gripper 5 which is the operative part of the manipulator and is shown gripping a workpiece 6 above a second workpiece 7. A hand controller indicated generally at 10 is manipulable by an operator 11. The position of the hand controller is output as hand controller position signals on lines 12a, 12b and 12c which input controller 9. Processed hand controller position signals from controller 9 output on line 8a to computer 18. Control signals to the manipulator joints pass along line 8b. Line 8b originates in the computer 18 which houses manipulator control software and hand controller software. Robotic manipulator 1 joint position signals input the computer 18 along line 8c. The force-moment signals measured by the force-moment sensor 4 are transmitted to the computer 18 through line 8d. Controller 9 houses the electronics of the electronics of the analogue control loop of this invention. The computer 18 outputs feedback control signals to the controller 9 on line 8e. Controller 9 outputs feedback control signals to the hand controller on lines 15a, 15b and 15c.

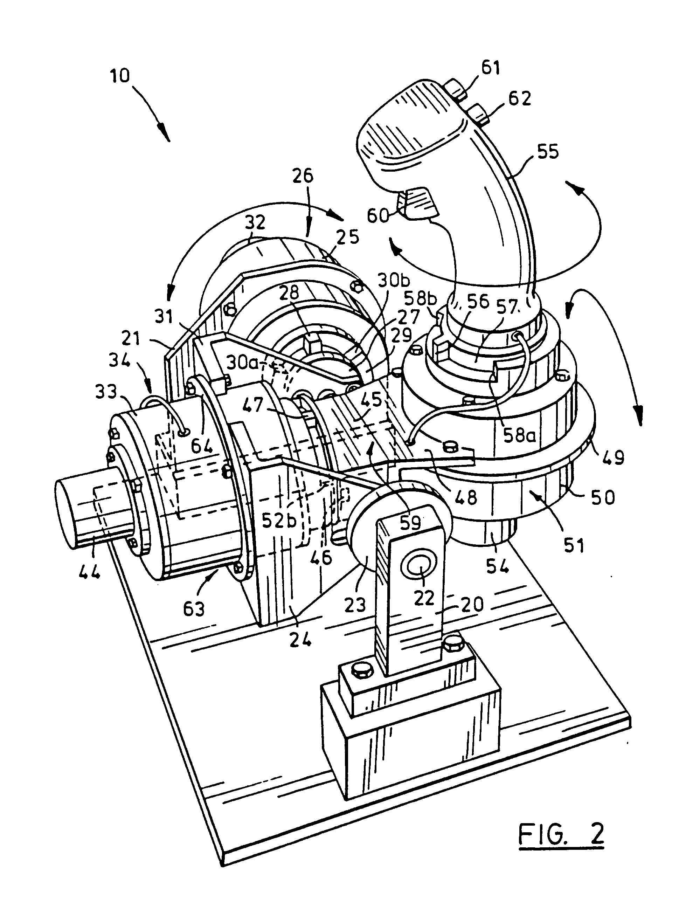

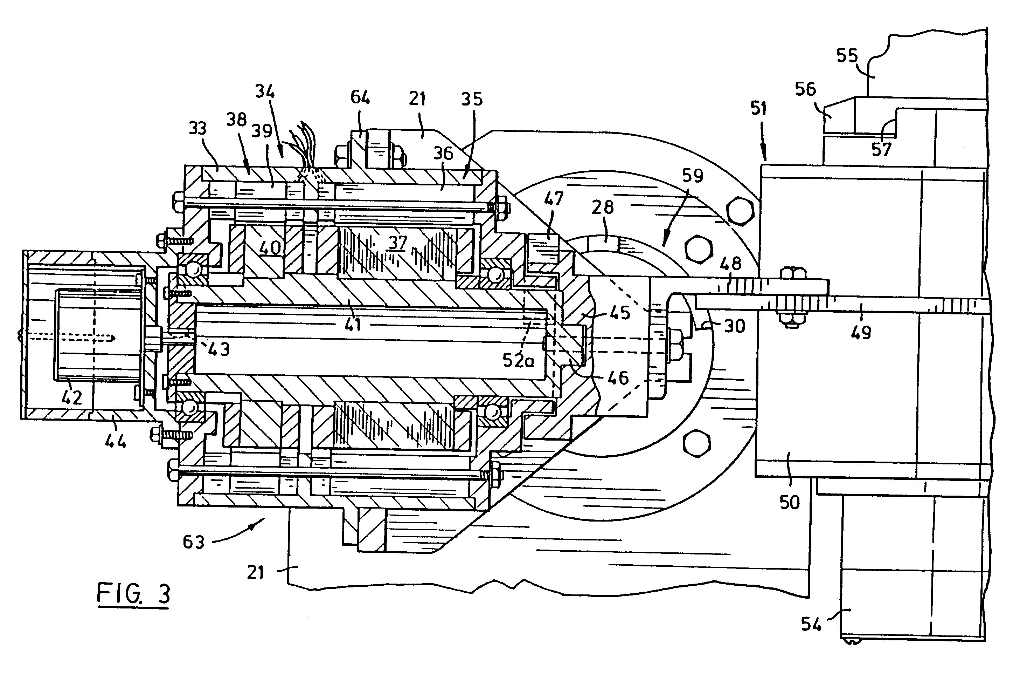

Hand controller 10 is depicted in greater detail in Figures 2 and 3. Two upstanding supports 20 and 21 form the base for the hand controller. Axle 22 is rotatably supported by upstanding support 20 and terminates in disk 23. Disk 23 is bolted to cradle member 24. A flange on casing 25 of motor/tachometer 26 is bolted to upstanding support 21. A peg 28 is formed at one end of common rotor shaft 27 of motor/tachometer 26. Peg 28 protrudes radially outwardly from common rotor shaft 27. Casing 25 terminates in arcuate piece 29, the ends of which constitute stops 30a and 30b which are in the path of peg 28 when common rotor shaft 27 rotates. The end of common rotor shaft 27 which supports peg 28 is bolted to cradle member 31. The other end of the common rotor shaft 27 is keyed to a potentiometer housed in housing 32. The internal structure of the motor/tachometer 26 and the potentiometer housed in housing 32 is identical to that of of motor/tachometer 34 and potentiometer 42, and is described hereinbelow in conjunction with Figure 3.

Cradle members 24 and 31 cradle casing 33 of motor/tachometer 34. The cradle members are bolted to flange 64 of casing 33.

As seen in Figure 3, casing 33 houses stator 36 and rotor 37 of motor 35 and stator 39 and rotor 40 of tachometer 38. Motor 35 is a d.c. brush motor and acts as a torque generator. Common rotor shaft 41 is affixed to rotors 37 and 40. Potentiometer 42 is keyed to one end of common rotor shaft 41 by key 43 on the common rotor shaft. A housing 44 surrounds the potentiometer. A mounting block 45 is keyed at the other end of common rotor shaft 41 by diametrically opposite keys on the common rotor shaft, one of which is indicated at 46. A peg 47 is formed at this other end of common rotor shaft 41 between stops 52a and 52b (seen in Figure 2) of casing 33.

Angle iron 48 is bolted between mounting block 45 and flange 49 of casing 50 of motor/tachometer 51. Together, the mounting block 45 and angle iron 48 comprise forearm 59. Forearm 59 with casing 33 and housing 44 comprises arm 63.

The internal structure of motor/tachometer 51 and the potentiometer housed within housing 54 is identical to that described in connection with motor/tachometer 34 and potentiometer 42. Thus, the common rotor shaft 57 of motor/tachometer 51 is keyed at one end to the potentiometer housed in housing 54. Common rotor shaft 57 is keyed at its other end to joystick 55. A peg 56 is formed on the common rotor shaft 57 at the joystick end between stops 58a and 58b of casing 50.

Motor position feedback switch 60 is located proximate the free end of the joystick 55 as is velocity/position mode control switch 61 and active/passive mode switch 62. Motor position feedback mode switch 60 is spring loaded to the "on" mode.

The motors (torque generators) of the hand controller are fed with feedback control signals on lines 15a, 15b and 15c of Figure 1 and the tachometers output on these lines. The potentiometers of the hand controller provide hand controller position signals on lines 12a, 12b and 12c of Figure 1.

From the foregoing description, it will be clear that an operator may grasp the joystick 55 and, by deflecting it laterally, rotate forearm 59 until peg 47 abuts stop 52a or 52b. In so doing, common rotor 41 rotates, moving the rotor 40 of tachometer 38 and rotor 37 of motor 35, and adjusting potentiometer 42. Similarly, deflecting the joystick vertically will tilt arm 63 in cradle members 24 and 31, moving peg 28 between stops 20a and 30b and rotating the common rotor 27 of motor/tachometer 25. Also similarly, the joystick 55 may be twisted, moving peg 56 between stops 58a and 58b and rotating the common rotor 57 of motor/tachometer 50. Thus, the hand controller has three degrees of freedom and may be deflected in any of these degrees of freedom to provide hand controller position signals and hand controller angular momentum signals relating to each degree of freedom via the three potentiometers and three tachometers in the hand controller. Each of the three degrees of freedom of the joystick controls one of the directions of movement for the gripper (5 of Figure 1) - i.e. its lateral, vertical, or forward-and-back motion.

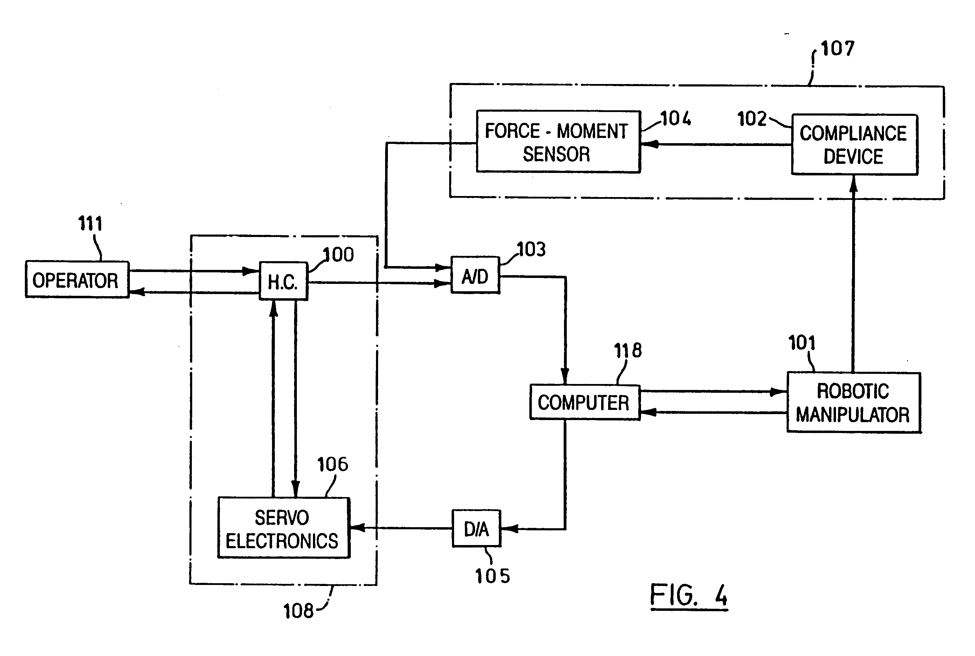

Figure 4 is a block diagram of the control loop of this invention incorporating the aforedescribed hand controller, the hand controller being shown in block form at 100. The hand controller interacts with an operator illustrated in block form at 111. That is, the operator 111 supplies input torques to the joystick of the hand controller and torques may be reflected back to the operator via the joystick. The hand controller 100 is connected for 2-way communication with servo electronics illustrated at 106. The servo electronics are housed in the controller 9 of Figure 1. The hand controller 100 and servo electronics 101 comprise an input and feedback block 108. Output signals from the hand controller, as well as feeding the servo electronics 106, input one channel of two channel analogue to digital converter 103. Analogue to digital converter 103 outputs the digital equivalent of each of its input channels independently to the computer (18 of Figure 1) which is illustrated in block form at 118. The computer 118 outputs to robotic manipulator 101 (1 of Figure 1). Robotic manipulator 101 inputs synthesis of sensor signal block 107. In this example embodiment, the synthesis of sensor signal block comprises compliance device 102 (2 of Figure 1), which receives as input the constrained forces at the gripper of the robotic manipulator and force/moment sensor 104 (4 of Figure 1), which are input by the compliance device. The force/moment sensor 104 outputs a force feedback signal to computer 118 via the other channel of analogue to digital converter 103. The computer processes the feedback signal and outputs the processed feedback signal to digital to analogue converter 105 which in turn outputs to servo electronics block 106 of input and feedback block 108.

The details of construction of the compliance device 102 and force/movement sensor 104 are well known to those skilled in the art.

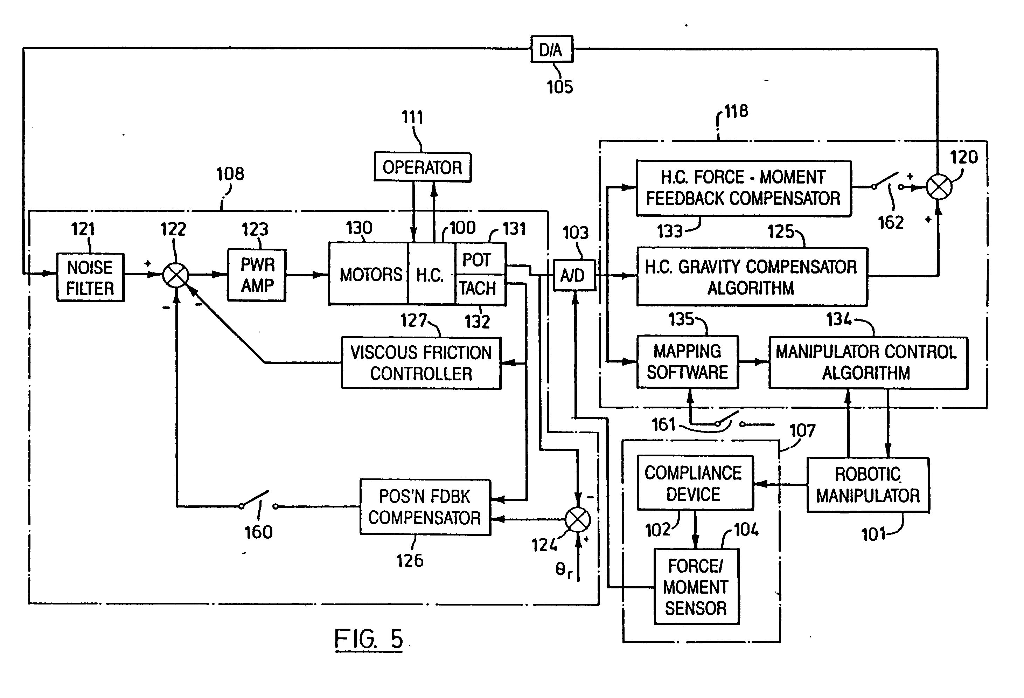

Figure 5 further details the control loop of Figure 4. Input and feedback block 108 includes noise filter 121 which inputs summing junction 122. The output of this summing junction inputs power amplifier 123 and the power amplifier outputs to the torque generating motors 130 of the hand controller 100. The potentiometers 131 of the hand controller input both the computer 118 (via the analogue/digital converter 103) and an input of summing junction 124. A reference angle (for each degree of freedom of the hand controller) forms the other input of summing junction 124. Summing junction 124 outputs to position feedback compensator 126. The tachometers 132 of the hand controller output to viscous friction controller 127 and the position feedback compensator 126. The position feedback compensator outputs through position feedback control switch 160 (60 of Figure 2) to a negative input of summing junction 122. Similarly, the viscous friction controller outputs to a negative input of summing junction 122.

The computer 118 includes a hand controller force-moment feedback compensator algorithm at block 133 which receives as input the output of analogue to digital converter 103. Block 133 outputs via switch 162 (62 of Figure 2) to summing junction 120. Hand controller gravity compensator algorithm at block 125 also receives as input the output of analogue to digital converter 103 and outputs to the second input of summing junction 120. Summing junction 120 outputs from the computer to digital to analogue converter 105. Mapping software at block 135 is also input from analogue to digital converter 103 and this software also receives signals from switch 161 (61 of Figure 2). The mapping software block 135 outputs to manipulator controller algorithm block 134. Block 134 is connected for two way communication with the robotic manipulator 101.

The details of construction of the noise filter 121, power amplifier 123, viscous friction controller 127, position feedback compensator 126 and gravity compensator 125 are well known to those skilled in the art.

Switches 160, 161 and 162 are operated by switches 60, 61, and 62, respectively of the hand controller of Figure 2.

The control loop allows the hand controller to operate in the following modes:
(1) active mode with position control;
(2) active mode with rate control;
(3) passive mode with position control; and
(4) passive mode with rate control.

In this regard "Active mode" means the hand controller force feedback loop is activated (on) and "passive mode" means the hand controller force feedback loop is deactivated (off).

The operation of the control system in each mode is now described absent the effect of the loop containing the gravity compensator block 125 and the loop containing the viscous friction controller 127; these loops are later described since they affect the operation in all modes.

With reference to Figure 5, to enter the active mode, active/passive mode switch 162 is closed (by the operator depressing switch 62 shown in Figure 2 on joystick 55). For active mode with manipulator position control, position/velocity mode control switch 161 (controlled by switch 61 shown in Figure 2 on the joystick) is set to manipulator position control mode and the motor position feedback switch 160 (controlled by switch 60 shown in Figure 2 on the joystick) is set to its open (off) position.

With these switch settings, when the operator 111 manipulates the hand controller 100, hand controller position signals, which are measured by the potentiometers 131 in the hand controller, are sent to analogue to digital converter 103. The digitised position signals from the analogue to digital converter 103 input computer 118. Since position/velocity control switch 161 is in position control mode, the digitised position signals are mapped by the mapping software 135 of computer 118 to corresponding manipulator gripper position command signals, which are then resolved by the manipulator control algorithm 134 to obtain joint command signals for the robotic manipulator. In this representative embodiment, the directional forces (vector forces) encountered at the gripper (5 in Figure 1) are reflected in the compliance device 102 in a manner which is measurable by the force/moment sensor 104 associated with the compliance device 102. The measured forces are output as directional force signals from the force/moment sensor to computer 118 where they are processed and output as processed force signals. Except as described hereinafter, these processed force signals are proportional to the forces encountered at the gripper lieing along each direction of motion controlled by the hand controller. The processed force signals from computer 118 are, after appropriate modification, used as hand controller torque generator (motor) control signals. More particularly, the processed force signals input digital to analogue converter 105 where they are converted to equivalent analogue processed forces signals. These signals are then filtered in bandwidth (noise) filter 121 and are amplified by power amplifier 123 and then input the motors 130 of the hand controller 100 as motor control signals. As a result, the force signal representing a scaled version of the component of the force vector at the gripper lieing along a direction of motion of the gripper controlled by a given DOF (Degree-of-Freedom) of the hand controller inputs the motor associated with the given DOF of the hand controller as a control (voltage) signal. This control signal generates a torque in the rotor of the hand controller motor which is in opposition to the deflection by the operator of the hand controller in the given DOF. Thus, the opposing torques are felt by the operator as a force opposing his deflection of the joystick. It will be clear to the skilled reader that this system reflects forces smoothly without backlash or mechanical noise.

For active mode with rate control, force feedback switch 162 is again closed and position/velocity control switch 161 is set to velocity control. The operation of the force feedback loop is identical to that described in connection with the position control mode except that the hand controller position signals input to the computer 118 are mapped to corresponding manipulator gripper velocity command signals for controlling the velocity (i.e. the rate and direction of movement) of the gripper. These signals are then resolved by the manipulator control algorithm 134 to obtain joint command signals for the robotic manipulator. As well, in this mode a motor position feedback loop is introduced as the operator 111 releases switch 60 of Figure 2 thereby closing switch 160. The operation of the motor position feedback loop is as follows. The hand controller position signals are fed to a negative input of summing junction 124. A reference angle for each degree of freedom of the hand controller is fed to a positive input of the summing junction 124. The difference signal is fed to position feedback compensator 126. Signals representing the rate of rotation of the hand controller in each of its degrees of freedom are generated by the tachometers 132 in the hand controller and are also fed to the position feedback compensator 126 in order to add damping to the motor position feedback loop. The output of the position feedback compensator 126 is negatively fed back to the power amplifier 123 via summing junction 122 and the amplified feedback signals are input to the motors 130 of the hand controller to generate torques opposing the deflection of the joystick from the reference angle position in each of its degrees of freedom. The effect is equivalent to spring loading the joystick so that when it is deflected from its rest position it tends to move back to that position. The spring effect also resists movement of the joystick away from the rest position which allows the operator more precise control of the stick. By use of an "electronic" spring, the spring constant is easily adjustable through an adjustment to the position feedback compensator and, as well, non-linearities may be introduced, if desired. Further, the reference angle may be changed to alter the rest position of the joystick, however, normally the rest position is chosen as that which defines a zero rate of movement for the gripper.

In processing the force signals, as before-mentioned, the computer 118 generally scales same to provide processed force signals which reflect forces in the joystick of the hand controller of appropriate strength. For some applications, however, the computer may be programmed to map the measured force signals so as to emphasize or diminish forces in some directions. For example, with the robotic manipulator used as shown in Figure 1 to insert workpiece 6 vertically into workpiece 7, it may be desired to emphasize vertical forces.

For many applications it is also desirable to program the computer to, in certain situations, derive the processed force signal directly from the computed manipulator position rather than from the measured force signal. This is appropriate when, for example, it is desired to prevent the operator from moving the manipulator arm so as to strike obstacles such as the floor or lamps. By storing the position of obstacles in the computer and comparing these stored positions with the computed manipulator position, exaggerated processed force signals may be generated as the robotic manipulator approaches these obstacles. Thus, as an obstacle is approached, a large opposing directional force may be reflected in the hand controller so that the operator is guided to avoid impacting the obstacle with the manipulator.

Singularities may also be avoided by deriving the processed force signal from the manipulator configuration. A singularity results when the configuration of the manipulator arm is such that a certain small change in the spatial position of the gripper would produce large swings of segments of the manipulator arm. These large swings could be deleterious to the integrity of the arm. To guard against the operator moving the arm through singularities, the computer may store these singularities so that when, as a result of a hand controller position signal, the manipulator approaches a singularity, the computer generates large processed force signals so that the operator will naturally move the joystick around the singularity.

The details of the computer algorithm to accomplish all of the foregoing would be obvious to one skilled in the art.

The bandwidth of the force feedback loop is only limited by the noise filter 121 and the sampling frequency of the measured force signals from the force/moment sensor 104. Thus, the force feedback response may be made sufficiently fast to reflect all humanly perceptible changes in the force. Since a human hand can distinguish vibrations of up to about 10 Hertz, the bandwidth of the force feedback loop of this invention is chosen so as to reflect vibrations of at least this frequency.

While in the representative embodiment of Figures 4 and 5, the synthesized sensor signals are measured force/moment signals, it is possible to reflect other conditions in the hand controller. For example, environmental field sensors, such as temperature sensors or radiation sensors, may replace force/moment sensor 104. For any condition sensors, the vector representing the intensity and direction of the condition of concern at the gripper will be reflected in the hand controller as a force vector opposing deflection of the joystick by the operator.

For operation in the passive mode with the hand controller operating as a position controller, force feedback switch 162 is opened, position/velocity control switch 161 is set to position control mode and position feedback switch 160 is opened. Hand controller position signals from the potentiometers 131 input the computer 118 via analogue to digital converter 103 and are mapped and resolved (by blocks 134 and 135) to position control signals for the manipulator arm. No force signals are fed back to the hand controller. Further, if the hand controller is released, it remains in its current position since the position feedback loop is opened circuited by virtue of position feedback control switch 160 being open.

For operation in the passive mode with the hand controller operating as a velocity controller, force feedback switch 162 is opened, position/velocity control switch 161 is set to velocity control mode and position feedback switch 160 is closed. Hand controller position signals from the potentiometers input the computer via the analogue to digital converter 103 and are mapped and resolved (by blocks 134 and 135) to velocity control signals for the manipulator arm. The hand controller position signals also input position feedback compensator 126 and are negatively fed back to the motors 130 of the hand controller through power amplifier 123 to provide a spring effect for the joystick as aforedescribed in connection with the active mode with velocity control.

The operation of the gravity compensation and viscous friction control loops, which operate in all four modes of operation of the hand controller, are now described.

The output of the tachometers 132 of the hand controller input viscous friction controller 127 (as well as position feedback compensator 126, as aforedescribed). The viscous friction controller produces a signal proportional to the directional rate measured by the tachometers which is negatively fed back to the motors of the hand controller through summing junction 122 and power amplifier 123. In this way, the more rapidly the joystick is moved by the operator, the greater the opposing torque created by the motors of the hand controller in consequence of the signals from the viscous friction controller. Thus, this circuit results in velocity feedback means which constrain the rate at which the operator will move the joystick.

The position signals from the potentiometers 131 of the hand controller input gravity compensation block 125 via the analogue to digital converter 103. The output of the gravity compensator is summed with the force feedback signals at summing junction 120 and, hence, is fed back to the motors 130 of the hand controller via noise filter 121, summing junction 122, and power amplifier 123. The gravity compensator, by way of an algorithm well known to those skilled in the art, provides a feedback signal which negatives the effects of gravity on the hand controller. Thus, acting alone, the gravity compensator makes the joystick seem weightless in the hands of an operator.

This invention could have application to other machines, such as a remotely controlled drill press, in which case the operative part would be the drill head and the hand controller could have a single degree of freedom to move the head up and down.

## Claims

1. A human-in-the-loop control loop for a machine having a plurality of joints and an operative part (5), said plurality of joints adapted for moving said operative part, comprising:
(a) a hand controller (100) having at least one degree of freedom so as to be deflectable in order to provide hand controller position signals for moving said operative part (5), each degree of freedom of said hand controller (100), controlling one direction of motion of said operative part (5);
(b) position mapping means (135) to map each of said hand controller position signals to an operative part position command signal indicative of a position for said operative part (5) along each of the directions of motion of said operative part (5) characterized by;
(c) velocity mapping means (135) to map each of said hand controller position signals to an operative part velocity command signal indicative of a velocity for said operative part (5) along each of the directions of motion of said operative part (5);
(d) selector means (161), controllable by the operator, to selectively activate said position mapping means and deactivate said velocity mapping means or activate said velocity mapping means and deactivate said position mapping means; and
(e) means (134) responsive to said selector means (161), receiving operative part position command signals and resolving these into joint command signals when the selector means (161) has activated the position mapping means, or receiving operative part velocity command signals and resolving these into joint command signals when the selector means (161) has activated the velocity mapping means, the joint command signals then being used for control of the movement of each of said joints.

2. The control loop of claim 1 further comprising torque generator means (130) for generating torques to oppose deflection of said hand controller and hand controller position feedback means (126) to generate difference signals between said hand controller position signals and selectable hand controller reference position signals and to negatively feed back a function of said difference signals to said torque generator means in order to generate torques opposing deflection of said hand controller from a reference position and switch means (160) to turn said hand controller position feedback means on or off.

3. The control loop of claim 2 further including gravity compensation means (125) to receive said hand controller position signals, to map said signals to gravity compensation signals proportional to the torque due to gravity on said hand controller at the hand controller Position corresponding to said hand controller position signals and to negatively feed back a function of said gravity compensation signals to said torque generator means.

4. The control loop of claim 3 including operative part position indicating means (118) for indicating the Position of said operative part, memory means (118) for storing an indication of certain positions of said operative part, comparator means (118) for comparing the position of said operative part indicated by said operative part position indicating means with said stored indications of certain positions and for generating a comparison signal, and wherein said torque generator means is also responsive to said comparison signal whereby torques are generated to oppose certain deflections of said hand controller in order to avoid the movement of said operative part to positions represented by said stored positions.

5. The control loop of claim 1 wherein said hand controller has three degrees of freedom with each of said three degrees of freedom of said hand controller controlling motion of said operative Part in one of the three spatial dimensions.

6. The control loop of claim 5 wherein said machine is a robotic manipulator and said operative part is the gripper of said robotic manipulator.

7. The control loop of claim 5 wherein said hand controller has three degrees of freedom and comprises a gimbal frame (20, 22, 24, 31, 59, 63) supporting a joystick (55) rotatable about its longitudinal axis.

8. The control loop of claim 5 wherein said hand controller has three degrees of freedom and comprises:
(a) upstanding supports (20) rotatably supporting a cradle (24, 31);
(b) an arm (63) received by said cradle such that the longitudinal axis of said arm is perpendicular to the axis of rotation of said cradle, said arm having a forearm (59) rotatable about its longitudinal axis;
(c) a joystick (55) supported for rotation about its longitudinal axis by said forearm such that the longitudinal axis of said joystick is substantially perpendicular to the longitudinal axis of said forearm and is substantially perpendicular to the axis of rotation of said cradle.

9. The control loop of claim 2 wherein said hand controller has three degrees of freedom with each of said three degrees of freedom of said hand controller controlling motion of said operative part in one of the three spatial dimensions and including:
sensing means (102, 104) responsive to a condition existing at said operative part for providing condition signals indicative of the intensity of said condition at said operative part in each of the three spatial dimensions;
a condition feedback loop means comprising torque generator control signal Production means (118, 105) for responding to said condition signals in order to produce torque generator control signals, said torque generator means for receiving a function of said torque generator control signals in order to generate torques to oppose deflection of said hand controller; and
selector means (162) to selectively close said condition feedback loop means.

10. The control loop of claim 9 wherein said sensing means comprise environmental field sensors.

11. The control loop of claim 9 wherein said sensing means comprise force sensors.

12. The control loop of claim 1 further comprising:
- sensing means (102, 104) responsive to a condition existing at said operative part for providing condition signals indicative of the intensity of said condition at said operative part in a direction tangent to each said path;
- a condition feedback loop means comprising torque generator control signal production means (118, 105) for responding to said condition signals in order to produce torque generator control signals and torque generator means for receiving a function of said torque generator control signals in order to generate torques to oppose deflection of said hand controller;
- selector means (162) to selectively close said condition feedback loop means;
whereby, when said condition feedback loop means is closed, the generated torque which opposes deflection of said hand controller in each degree of freedom of said hand controller is related to the intensity of said condition tangent to each said path.

13. The control loop of claim 12 wherein said machine is a robotic manipulator (1) and said operative part is the gripper (5) of said robotic manipulator.

14. The control loop of claim 12 further comprising hand controller Position feedback means (126) to generate difference signals between said hand controller position signals and selectable hand controller reference position signals and to negatively feed back a selectable function of said difference signals to said torque generator means in order to generate torques opposing deflection of said hand controller from a reference position and switch means (160) to turn said hand controller position feedback means on or off.

15. The control loop of claim 14 including gravity compensation means (125) to receive said hand controller position signals, to map said signals to gravity compensation signals proportional to the torque due to gravity on said hand controller at the hand controller position corresponding to said hand controller position signals and to negatively feed back a function of said gravity compensation signals to said torque generator means.

16. The control loop of claim 12 wherein said sensing means comprise environmental field sensors.

17. The control loop of claim 16 further comprising velocity feedback means (132, 127) to negatively feed back a function of the rate of movement of said hand controller in each degree of freedom of said hand controller to said torque generator means such that a torque proportional to the rate of movement of said hand controller in any given degree of freedom is generated to oppose the rat, of deflection of said hand controller in said given degree of freedom.

## Patentansprüche

1. Handsteuerkreis für eine Maschine mit einer Mehrzahl von Gelenken und einem Operationsteil (5), wobei die Mehrzahl von Gelenken geeignet ist zur Bewegung des Operationsteils, welcher aufweist:
(a) eine Handsteuereinrichtung (100) mit wenigstens einem Freiheitsgrad, die auslenkbar ist, um Handsteuer-Positionssignale bereitzustellen für die Bewegung des Operationsteils (5), wobei jeder Freiheitsgrad der Handsteuereinrichtung (100) eine Bewegungsrichtung des Operationsteils (5) steuert;
(b) Positionsabbildungsmittel (135) zur Abbildung jedes der Handsteuer-Positionssignale in einem Operationsteil-Positionsbefehlssignal, das eine Position für das Operationsteil (5) anzeigt entlang jeder der Bewegungsrichtungen des Operationsteils (5),
**gekennzeichnet durch**
(c) Geschwindigkeitsabbildungsmittel (135) zur Abbildung jedes der Handsteuer-Positionssignale in einem Operationsteil-Geschwindigkeitsbefehlssignal, das eine Geschwindigkeit für das Operationsteil (5) anzeigt entlang jeder der Bewegungsrichtungen des Operationsteils (5);
(d) durch die Bedienungsperson steuerbare Auswahlmittel (161) zur selektiven Aktivierung der Positionsabbildungsmittel und Desaktivierung der Geschwindigkeitsabbildungamittel oder Aktivierung der Geschwindigkeitsabbildungsmittel und Desaktivierung der Positionsabbildungsmittel; und
(e) auf die Auswahlmittel (161) ansprechende Mittel (134), die Operationsteil-Positionsbefehlssignale empfangen und diese in Gelenkbefehlssignale auflösen, wenn die Auswahlmittel (161) die Positionsabbildungsmittel aktiviert haben, oder Operationsteil-Geschwindigkeitsbefehlssignale empfangen und diese in Gelenkbefehlssignale auflösen, wenn die Auswahlmittel (161) die Geschwindigkeitsabbildugnsmittel aktiviert haben, wobei die Gelenkbefehlssignale dann für die Steuerung der Bewegung jedes der Gelenke verwendet werden.

2. Steuerkreis nach Anspruch 1, der weiterhin ausweist: Drehmomenterzeugungsmittel (130) zur Erzeugung von Drehmomenten, um der Auslenkung der Handsteuereinrichtung entgegenzuwirken, und Handsteuer-Positionsrückführmittel (126) zur Erzeugung von Differenzsignalen zwischen den Handsteuer-Positionssignalen und auswählbaren Handsteuer-Bezugspositiinssignalen und zur negativen Rückführung einer Funktion der Differenzsignale zu den Drehmomenterzeugungsmitteln, um der Auslenkung der Handsteuereinrichtung aus einer Bezugsposition entgegenwirkende Drehmomente zu erzeugen, und Schaltermittel (160) zur Ein- und Ausschaltung der Handsteuer-Positionsrückführmittel.

3. Steuerkreis nach Anspruch 2, der weiterhin enthält: Schwerkraft-Kompensationsmittel (125) zum Empfang der Handsteuer-Positionssignale, zur Abbildung der Signale in Schwerkraft-Kompensationssignalen proportional zum Drehmoment aufgrund der Schwerkraft auf die Handsteuereinrichtung an der Position der Handsteuereinrichtung entsprechend den Handsteuer-Positionssignalen, und zur negativen Rückführung einer Funktion der Schwerkraft-Kompensationssignale zu den Drehmomenterzeugungsmitteln.

4. Steuerkreis nach Anspruch 3, enthaltend Operationsteil-Positionsanzeigemittel (118) zur Anzeige der Position des Operationsteils, Speichermittel (118) zum Speichern einer Anzeige bestimmter Positionen des Operationsteils, Vergleichsmittel (118) zum Vergleich der durch die Operationsteil-Positionsanzeigemittel angezeigten Position des Operationsteils mit den gespeicherten Anzeigen bestimmter Positionen und zur Erzeugung eines Vergleichssignals, und worin die Drehmomenterzeugungsmittel auch auf das Vergleichssignal ansprechen, wodurch Drehmomente erzeugt werden, um bestimmten Auslenkungen der Handsteuereinrichtung entgegenzuwirken zur Vermeidung der Bewegung des Operationsteils in durch die gespeicherten Positionen dargestellte Positionen.

5. Steuerkreis nach Anspruch 1, worin die Handsteuereinrichtung drei Freiheitgrade hat, wobei jeder der drei Freiheitsgrade der Handsteuereinrichtung die Bewegung des Operationsteils in einer der drei räumlichen Dimensionen steuert.

6. Steuerkreis nach Anspruch 5, worin die Maschine ein Roboter-Manipulator und das operationsteil der Greifer des Roboter-Manipulators sind.

7. Steuerkreis nach Anspruch 5, worin die Handsteuereinrichtung drei Freiheitsgrade hat und einen kardanischen Rahmen (20,22,24,31,59,63) aufweist, der einen um seine Längsachse drehbaren Steuerhebel (55) stützt.

8. Steuerkreis nach Anspruch 5, worin die Handsteuereinrichtung drei Freiheitsgrade hat und aufweist:
(a) hochstehende Stützen (20), die drehbar ein Gestell (24,31) tragen;
(b) ein vom Gestell aufgenommener Arm (63), derart, daß die Längsachse des Arms senkrecht zur Drehachse des Gestells ist, wobei der Arm einen um seine Längsachse drehbaren Vorarm (59) hat;
(c) einen vom Vorarm um seine Längsachse drehbar gestützten Steuerhebel (55), derart, daß die Längsachse des Steuerhebels im wesentlichen senkrecht zur Längsachse des Vorarms und im wesentlichen senkrecht zur Drehachse des Gestells ist.

9. Steuerkreis nach Anspruch 2, worin die Handsteuereinrichtung drei Freiheitsgrade hat, wobei jeder der drei Freiheitsgrade der Handsteuereinrichtung die Bewegung des Operationsteils in einer der räumlichen Dimensionen steuert, enthaltend:
Fühlmittel (102,104), die auf einen Zustand ansprechen, der am Operationsteil existiert, zur Bereitstellung von die Intensität des Zustands am Operationsteil in jeder drei räumlichen Dimensionen anzeigenden Zustandssignalen;
einen Zustands-Rückführkreis, der Drehmomentgenerator-Steuersignalerzeugungsmittel (118,105) aufweist, die auf die Zustandssignale ansprechen, um Drehmomentgenerator-Steuersignale zu erzeugen, wobei der Drehmomentgenerator eine Funktion der Drehmomentgenerator-Steuersignale empfängt, um der Auslenkung der Handsteuereinrichtung entgegenwirkende Drehmomente zu erzeugen; und
Auswahlmittel (162) zum selektiven Schließen des Zustands-Rückführkreises.

10. Steuerkreis nach Anspruch 9, worin die Fühlmittel Umgebungfeldsensoren aufweisen.

11. Steuerkreis nach Anspruch 9, worin die Fühlmittel Kraftsensoren aufweisen.

12. Steuerkreis nach Anspruch 1, weiterhin aufweisend:
- Fühlmittel (102,104), die auf einen Zustand ansprechen, der am Operationsteil existiert, zur Bereitstellung von die Intensität des Zustands am Operationsteil in einer Richtung, die tangential zu jedem Weg ist, anzeigenden Zustandssignalen,
- einen Zustands-Rückführkreis, der Drehmomentgenerator-Steuersignalerzeugungsmittel (118,105), die auf die Zustandssignale ansprechen, um Drehmomentgenerator-Steuersignale zu erzeugen, und einen Drehmomentgenerator zum Empfang einer Funktion der Drehmomentgenerator-Steuersignale für die Erzeugung von der Auslenkung der Handsteuereinrichtung entgegenwirkenden Drehmomenten aufweist;
- Auswahlmittel (162) zum selektiven Schließen des Zustands-Rückführkreises;
wodurch, wenn der Zustands-Rückführkreis geschlossen ist, das der Auslenkung der Handsteuereinrichtung in jedem Freiheitsgrad der Handsteuereinrichtung entgegenwirkende erzeugte Drehmoment auf die Intensität des zu jedem Weg tangentialen Zustands bezogen ist.

13. Steuerkreis nach Anspruch 12, worin die Maschine ein Roboter-Manipulator (1) und das Operationsteil der Greifer (5) des Roboter-Manipulators sind.

14. Steuerkreis nach Anspruch 12, weiterhin aufweisend Handsteuerpositions-Rückführmittel (126) zur Erzeugung von Differenzsignalen zwischen den Handsteuer-Positionssignalen und auswählbaren Handsteuer-Bezugspositionssignalen und zur negativen Rückführung einer auswählbaren Funktion der Differenzsignale zum Drehmomentgenerator, um der AusLenkung der Handsteuereinrichtung aus einer Bezugsposition entgegenwirkende Drehmomente zu erzeugen, und Schaltermittel (160) zur Ein- und Ausschaltung der Handsteuerpositions-Rückführmittel.

15. Steuerkreis nach Anspruch 14, enthaltend Schwerkraft-Kompensationsmittel (125) zum Empfang der Handsteuer-Positionsignale, zur Abbildung der Signale in Schwerkraft-Kompensationssignalen proportional zum Drehmoment aufgrund der Schwerkraft auf die Handsteuereinrichtung an der Position der Handsteuereinrichtung entsprechend den Handsteuer-Positionssignalen, und zur negativen Rückführung einer Funktion der Schwerkraft-Kompensationssignale zum Drehmomentgenerator.

16. Steuerkreis nach Anspruch 12, worin die Fühlmittel Umgebungsfeldsensoren aufweisen.

17. Steuerkreis nach Anspruch 16, weiterhin aufweisend Geschwindigkeits-Rückführmittel (132,127) zur negativen Rückführung einer Funktion der Bewegungsgeschwindigkeit der Handsteuereinrichtung in jedem Freiheitsgrad der Kandsteuereinrichtung zum Drehmomentgenerator, derart, daß ein zur Bewegungsgeschwindigkeit der Handsteuereinrichtung in jedem gegebenen Freiheitsgrad proportionales Drehmoment erzeugt wird, um der Auslenkgeschwindigkeit der Handsteuereinrichtung in dem gegebenen Freiheitsgrad entgegenzuwirken.

## Revendications

1. Boucle de commande avec intervention humaine, destinée à une machine ayant plusieurs articulations et une partie (5) de manoeuvre, les articulations étant destinées à déplacer la partie de manoeuvre, la boucle comprenant :
(a) un organe (100) de commande à la main, ayant au moins un degré de liberté afin qu'il puisse être dévié et donne des signaux de position de l'organe de commande à la main destinés au déplacement de la partie de manoeuvre (5), chaque degré de liberté de l'organe de commande (100), à la main assurant la commande dans une direction de déplacement de la partie de manoeuvre (5), et
(b) un dispositif (135) de représentation de position destiné à représenter chacun des signaux de position de l'organe de commande à la main sous forme d'un signal de commande de position de partie de manoeuvre qui est représentatif d'une position de la partie de manoeuvre (5) le long de chacune des directions de déplacement de la partie de manoeuvre (5), caractérisée par
(c) un dispositif (135) de représentation de vitesse destiné à représenter chacun des signaux de position de l'organe de commande à la main en un signal de commande de vitesse de la partie de commande, ce signal étant représentatif d'une vitesse de la partie de commande (5) le long de chacune des directions de déplacement de la partie de manoeuvre (5),
(d) un dispositif sélecteur (161), qui peut être commandé par l'opérateur, destiné à activer sélectivement le dispositif de représentation de position et à désactiver le dispositif de représentation de vitesse ou à activer le dispositif de représentation de vitesse et à désactiver le dispositif de représentation de position, et
(e) un dispositif (134) commandé par le dispositif sélecteur (161), destiné à recevoir les signaux de commande de position de la partie de manoeuvre et à les traiter sous forme de signaux de commande d'articulation lorsque le dispositif sélectif (161) a activé le dispositif de représentation de position, ou à recevoir des signaux de commande de vitesse de partie de manoeuvre et à les transformer en signaux de commande d'articulation lorsque le dispositif sélecteur (161) a activé le dispositif de représentation de vitesse, les signaux de commande d'articulation étant alors utilisés pour la commande du déplacement de chacune des articulations.

2. Boucle de commande selon la revendication 1, comprenant en outre un dispositif (130) destiné à créer des couples destinés à s'opposer à la déviation de l'organe de commande à la main, et un dispositif (126) de rétroaction de position de l'organe de commande à la main destiné à créer des signaux de différence entre les signaux de position de l'organe de commande à la main et des signaux de position de référence de l'organe de commande à la main qui peuvent être sélectionnés, et à assurer une rétroaction négative, en fonction des signaux de différence, pour le dispositif générateur de couple afin que celui-ci crée des couples s'opposant à la déviation de l'organe de commande à la main par rapport à une position de référence, et un dispositif de commutation (160) destiné à mettre en service le dispositif de rétroaction de position de l'organe de commande à la main ou à le mettre hors service.

3. Boucle de commande selon la revendication 2, comprenant en outre un dispositif (125) de compensation de pesanteur destiné à recevoir les signaux de position de l'organe de commande à la main, à transformer ces signaux en signaux de compensation de pesanteur proportionnels au couple dû à la pesanteur agissant sur l'organe de commande à la main, à la position de l'organe de commande à la main qui correspond aux signaux de position de l'organe de commande à la main, et à assurer une rétroaction négative, en fonction des signaux de compensation de pesanteur, pour le dispositif générateur de couple.

4. Boucle de commande selon la revendication 3, comprenant un dispositif (118) destiné à indiquer la position de la partie de manoeuvre, une mémoire (118) destinée à conserver une indication de certaines positions de la partie de manoeuvre, un dispositif comparateur (118) destiné à comparer la position de la partie de manoeuvre indiquée par le dispositif indicateur de position de partie de manoeuvre aux indications mémorisées de certaines positions et à créer un signal de comparaison, et dans lequel le dispositif générateur de couple est aussi commandé par le signal de comparaison de manière que des couples soient créés et s opposent à certaines déviations de l'organe de commande à la main de manière que le déplacement de la partie de manoeuvre vers des positions représentées par les positions mémorisées soit évité.

5. Boucle de commande selon la revendication 1, dans laquelle l'organe de commande à la main a trois degrés de liberté, chacun des trois degrés de liberté de l'organe de commande à la main commandant le déplacement de la partie de manoeuvre dans l'une des trois dimensions de l'espace.

6. Boucle de commande selon la revendication 5, dans laquelle la machine est un manipulateur à robot et la partie de manoeuvre est l'organe de saisie du manipulateur à robot.

7. Boucle de commande selon la revendication 5, dans laquelle l'organe de commande à la main a trois degrés de liberté et comporte un châssis monté à la cardan (20, 22, 24, 31, 59, 63) qui supporte une manette de commande (55) qui peut tourner autour de son axe longitudinal.

8. Boucle de commande selon la revendication 5, dans laquelle l'organe de commande à la main a trois degrés de liberté et comporte
(a) des supports verticaux (20) qui supportent un berceau (24, 31) de manière qu'il puisse tourner,
(b) un bras (63) logé dans le berceau de manière que l'axe longitudinal du bras soit perpendiculaire à l'axe de rotation du berceau, le bras ayant un avant-bras (59) qui peut tourner autour de son axe longitudinal, et
(c) une manette de commande (55) supportée afin qu'elle puisse tourner autour de son axe longitudinal par l'avant-bras de manière que l'axe longitudinal de la manette soit sensiblement perpendiculaire à l'axe longitudinal de l'avant-bras et soit sensiblement perpendiculaire à l'axe de rotation du berceau.

9. Boucle de commande selon la revendication 2, dans laquelle l'organe de commande à la main a trois degrés de liberté, chacun des trois degrés de liberté de l'organe de commande à la main commandant le déplacement de la partie de manoeuvre dans l'une des trois dimensions de l'espace, la boucle comprenant
un dispositif (102, 104) de détection sensible à une condition existant au niveau de la partie de manoeuvre et destiné à donner des signaux de condition représentatifs de l'intensité de cette condition au niveau de la partie de commande dans chacune des trois dimensions de l'espace,
une boucle de rétroaction de condition comprenant un dispositif (118, 105) de production d'un signal de commande du générateur de couple, destiné à être commandé par les signaux de condition et à former des signaux de commande du générateur de couple, le générateur de couple étant destiné à recevoir une fonction des signaux de commande de générateur de couple afin qu'il crée des couples destinés à s'opposer à la déviation de l'organe de commande à la main, et
un dispositif sélecteur (162) destiné à fermer sélectivement la boucle de rétroaction de condition.

10. Boucle de commande selon la revendication 9, dans laquelle le dispositif de détection comprend des capteurs de champ de l'environnement.

11. Boucle de commande selon la revendication 9, dans laquelle le dispositif de détection comprend des capteurs de force.

12. Boucle de commande selon la revendication 1, comprenant en outre
- un dispositif de détection (102, 104) commandé par une condition existant au niveau de la partie de manoeuvre et destiné à donner des signaux de condition représentatifs de l'intensité de la condition au niveau de la partie de manoeuvre en direction tangente à chaque trajet de déplacement,
- une boucle de rétroaction de condition comprenant un dispositif (118, 105) destiné à produire un signal de commande du générateur de couple et à être sensible aux signaux de condition afin qu'il forme des signaux de commande de générateur de couple, et un dispositif générateur de couple destiné à recevoir une fonction des signaux de commande du générateur de couple et à créer des couples destinés à s'opposer à la déviation de l'organe de commande à la main, et
- un dispositif sélecteur (162) destiné à fermer sélectivement la boucle de rétroaction de condition,
si bien que, lorsque la boucle de rétroaction de condition est fermée, le couple créé qui s'oppose à la déviation de l'organe de commande à la main pour chaque degré de liberté de l'organe de commande à main est lié à l'intensité de la condition tangentiellement audit trajet.

13. Boucle de commande selon la revendication 12, dans laquelle la machine est un manipulateur de robot (1) et la partie de manoeuvre est l'organe de saisie (5) du manipulateur à robot.

14. Boucle de commande selon la revendication 12, comprenant en outre un dispositif (126) de rétroaction de position d'organe de commande à la main destiné à créer des signaux de différence entre les signaux de position d'organe de commande à la main et des signaux de position de référence d'organe de commande à main qui peuvent être sélectionnés, et à assurer une rétroaction négative, suivant une fonction des signaux de différence qui peut être choisie, pour le dispositif générateur de couple afin que celui-ci crée des couples qui s'opposent à la déviation de l'organe de commande à la main par rapport à la position de référence, et un dispositif de commutation (160) destiné à mettre en service le dispositif de rétroaction de position de l'organe de commande à la main et à le mettre hors service.

15. Boucle de commande selon la revendication 14, comprenant un dispositif (125) de compensation de pesanteur destiné à recevoir les signaux de position de l'organe de commande à la main, à transformer ces signaux en signaux de compensation de pesanteur proportionnels au couple dû à la pesanteur agissant sur l'organe de commande à la main pour la position de l'organe de commande à la main correspondant aux signaux de position de l'organe de commande à la main, et à créer une rétroaction négative, suivant une fonction des signaux de compensation de pesanteur, pour le dispositif générateur de couple.

16. Boucle de commande selon la revendication 12, dans laquelle le dispositif de détection comprend des capteurs de champ de l'environnement.

17. Boucle de commande selon la revendication 16, comprenant en outre un dispositif (132, 127) de rétroaction de vitesse destiné à assurer une rétroaction négative en fonction de la vitesse de déplacement de l'organe de commande à la main pour chaque degré de liberté de l'organe de commande à la main, pour le dispositif générateur de couple, afin qu'un couple proportionnel à la vitesse de déplacement de l'organe de commande à la main, dans un degré quelconque de liberté, soit créé et s'oppose à la vitesse de déviation de l'organe de commande à la main pour le degré correspondant de liberté.
